# EUROPEAN PATENT APPLICATION

(11) **EP 1 797 778 A1**
(43) Date of publication of application: **20.06.2007**
(21) Application number: 06124277.2
(22) Date of filing: 17.11.2006
(51) Int. Cl.: A23N 12/02

(54) **Washing unit particularly for vegetables, with stacked tanks and forced path**

(30) Priority: 16.12.2005 IT PD20050370
(71) Applicant: G.N.A. Packaging S.r.l., 40064 Ozzano Dell'Emilia BO (IT)
(72) Inventor: Bertolini, Maurizio, 45100 Rovigo (IT)
(74) Representative: Modiano, Micaela Nadia

(57) **Abstract**

A washing unit particularly for vegetables, characterized in that it comprises at least two stacked tanks (Vs, Vi), which are suitable to contain washing water and vegetables to be washed, and wherein the upper tanks (Vs) are connected to the lower tanks (Vi), so that the vegetables to be washed are transferred among the various tanks (Vi, Vs).

## Description

The present invention relates to machines for preparing ready-to-eat food products and in particular relates to machines for preparing and washing vegetables, particularly leaf vegetables.

Currently, many foods are sold already prepared or partially prepared for eating, such as for example portions of fresh filled dough or another kind of food which requires final cooking, such as precooked and frozen pizzas, which require only thawing and heating.

Fresh vegetables also are prepared for eating and in particular leaf vegetables are washed and drained accurately and optionally cut into small parts and mixed with other leaf vegetables and packaged into portions in modified-atmosphere packages.

Vegetables are currently washed by using washing units which comprise mainly a generically rectangular water tank, a plurality of bubblers immersed in the water, and a conveyor belt for extracting the washed vegetables.

The vegetables are introduced in the tank at one of the shorter walls and are propelled by the stream of water toward the opposite shorter wall, where they are extracted from the tank by the extraction conveyor belt.

The bubblers are arranged within the tank at a depth which is intermediate between the surface of the water and the bottom and introduce air into the tank. The introduced air, even at a modest pressure, moves the vegetables so as to separate the various leaves and facilitate the separation of the solid parts from the surface of the vegetables.

The bottom of the tank is preferably hopper-shaped so as to collect the precipitated dirt in a confined region and remove it easily from the tank.

In order to perform optimum washing of the vegetables, especially of leaf vegetables, a plurality of washing units arranged in series are used: the vegetables pass in sequence through all the washing units, successively releasing the largest dirt, the finest dirt, any residues that still adhere to the surface of the vegetables, and is then subjected to a final rinsing or draining.

The water that is used normally receives the addition of acid or chemical products for eliminating bacteria from the water and the vegetables being washed.

The various washing units are loaded sequentially with water which receives the addition of acid and/or bactericidal agent in decreasing levels.

In order to increase the quantity of treated product, wider washing units are used, keeping unchanged their length, i.e., the time for which the vegetables remain in water.

Currently, the following arrangement is preferred:
- a washing unit with water to which acid or bactericidal agent has been added, suitable to perform a coarse wash;
- a second washing unit with water to which a small amount of acid or bactericidal agent is added, suitable to perform a second wash;
- a third finishing washing unit, with water without acid or chemical products, in which the bactericidal effect is obtained by radiating UV rays or by another non-chemical method.

The set of all of said washing units constitutes a considerable space occupation, both when they are arranged in line and when they are arranged side-by-side.

The last washing unit is provided with a lifting belt of suitable length and height so as to transfer the washed vegetables into the inlet of the centrifugal dryer. Since said lifting belt has considerable dimensions and lifting height, it has a high cost.

The aim of the present invention is to provide a washing unit, particularly for vegetables, which allows to obviate the drawbacks of known ones, i.e., to achieve the same washing result for the same amount of vegetables by occupying less space.

Within this aim, an object of the invention is to provide a washing unit which allows to avoid the use of the expensive final lifting belt to introduce the washed vegetables in the drying unit.

Another object of the invention is to provide a washing unit which uses, for the same space occupation, more differentiated washing regions than current washing units.

Another object of the invention is to provide a washing unit having automatic recovery of the water that overflows from the upper tank.

This aim and these and other which will become better apparent hereinafter are achieved with a washing unit particularly for vegetables, the characteristics of which are defined in the appended claims. Advantageously, the washing unit comprises at least two stacked tanks, the upper tank being connected to the lower tank by openings and/or lifting belts.

One or both of the upper and lower tanks are provided with air bubblers.

The lower tank is divided longitudinally into three regions by two generically parallel partitions, which are shorter than the length of the tank and are connected to a shorter wall of the tank, so as to constitute a central forced path from the wall to which the partitions are connected toward the opposite shorter wall, and a lateral path for return from the shorter wall that is not connected to the shorter wall that is connected to said partitions.

Suitable valves introduce into each tank water and/or bactericidal chemical agent according to the requirements and in order to replenish the water and the chemical agent that have been used.

The product to be washed is introduced in the upper tank, at the wall that lies above the shorter wall of the lower tank that is not connected to said partitions.

The product is entrained through the entire upper tank up to the opposite shorter wall, from where it is conveyed into the lateral regions of the lower tank by means of openings or chutes of the upper tank.

The product then travels along the lateral regions of the lower tank, between the partitions and the side walls, until it reaches the shorter wall of the lower tank that is not connected to said partitions and travels along the central region of the lower tank up to the shorter wall of the lower tank that is connected to said partitions in order to be extracted.

In a second embodiment, the product is introduced in the lower tank, from the side where the partitions are connected to the shorter wall of said tank, and is entrained by the motion of the water toward the opposite shorter wall of said tank to be conveyed into the outer regions between the partitions and the lateral edges of the tank.

A lifting belt for each lateral region of the lower tank transfers the product to the upper tank. The product is entrained by the water into the upper tank in the same direction as its first path in the lower tank.

It is preferable to combine the two embodiments so as to transfer the product extracted from the lower tank of the washing unit according to the first example and introduce it in the lower tank of the washing unit according to the second example.

The new washing unit thus constituted has a plurality of regions for treating the product in the same length, and each of said treatment regions can have different washing and/or chemical treatment methods.

The last tank of the vegetable washing treatment does not receive the addition of chemical bactericidal agents but is irradiated by UV rays, with ozone or with another non-chemical bactericidal treatment.

The characteristics of the washing unit according to the invention, particularly for vegetables, with stacked tanks and forced path will become better apparent from the following description with reference to the drawings, provided by way of non-limiting example.

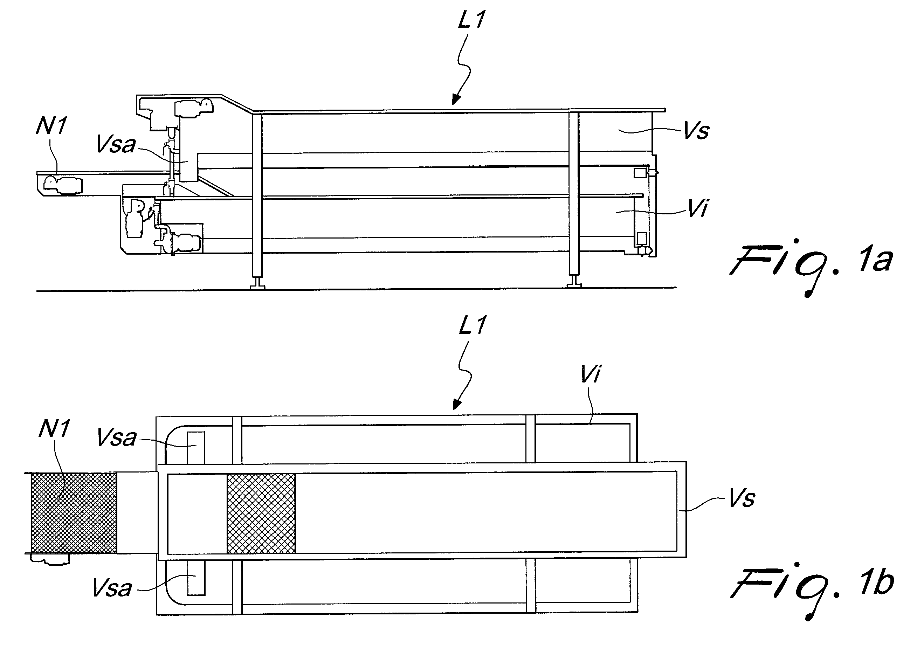

Figures 1a and 1b are a side view and a plan view of a first embodiment of a washing unit according to the invention;
Figures 2a, 2b are a side view and a plan view of a second embodiment;
Figure 3 is a side view of a combination of the washing unit of Figures 1a, 1b with the washing unit of Figures 2a, 2b;
Figure 4 is a plan view of the lower tank of the washing unit of Figures 1a, 1b;
Figure 5 is a plan view of the lower tank of the washing unit of Figures 2a, 2b.

A washing unit according to the invention is designated by L1 and comprises two substantially rectangular stacked tanks Vs, Vi which may have a generically identical length.

Preferably, the upper tank Vs is shorter than the lower tank Vi.

The upper tank Vs has, at or proximate to one of its shorter walls, a connection, such as lower openings Vsa or chutes, which are suitable to convey the product into the lower tank, and in particular to convey the product proximate to the corners formed by the shorter wall and by the longer walls of the lower tank Vi.

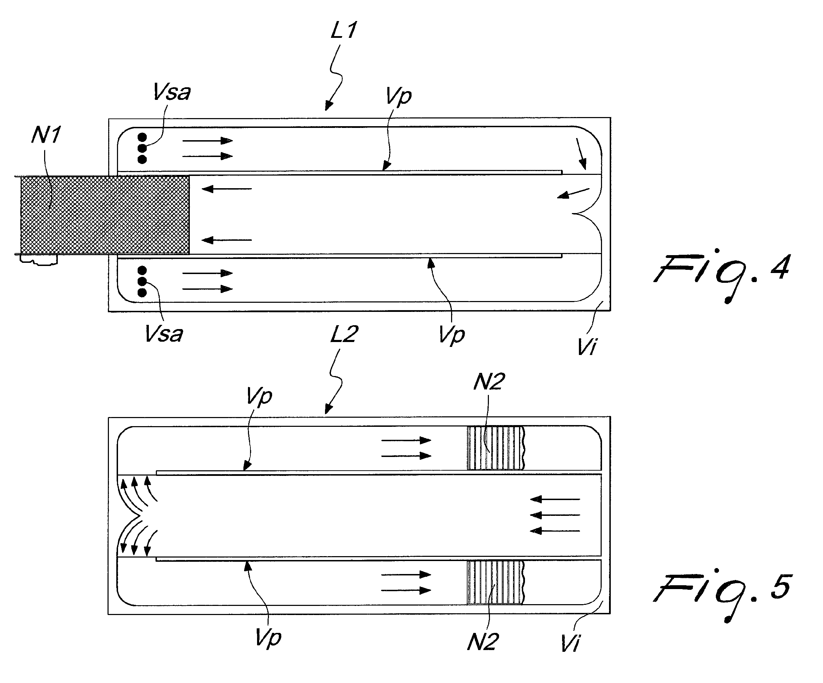

The lower tank Vi has at least two vertical partitions Vp, which are parallel to each other and to the main walls of the tank Vi, as shown in Figure 4.

In particular, said partitions Vp are connected to a shorter wall of said lower tank Vi so as to obtain a central region comprised between said two partitions Vp and lateral regions comprised between each partition Vp and the side wall of the tank Vi.

In the central region of the lower tank Vi, proximate to its wall connected to said partitions Vp, a lifting extraction belt N1 is provided for extracting the washed product therefrom.

The upper tank Vs is arranged on the lower tank Vi so that the openings or chutes Vsa of the upper tank Vs introduce the product in the lower tank Vi in the lateral regions and proximate to the shorter wall connected to the partitions Vp.

One or both of the tanks Vi, Vs are provided with bubblers suitable to introduce air in the water from below, so as to shake the product to be washed and facilitate the separation of dirt.

The tanks Vi, Vs are filled with water and bactericidal agents.

The tanks thus constituted can have regions or portions suitable to facilitate the deposition and settling of the dirt suspended in the water used to wash and convey the product being washed.

A processing path is provided in which the product to be washed is introduced in the upper tank Vs at the shorter wall that lies opposite the openings or chutes Vsa toward the lower tank Vi.

The product is entrained by the water through all of the upper tank Vs up to the opposite shorter wall, from where it is conveyed into the lateral regions of the lower tank Vi through the openings or chutes Vsa of said upper tank Vs (Figure 4).

The product then travels along the lateral regions of the lower tank Vi between the partitions Vp and the side walls, until it reaches the shorter wall of the lower tank Vi which is not connected to said partitions Vp and flows along the central region of the lower tank Vi up to the shorter wall of the lower tank Vi which is connected to said partitions Vp to be extracted.

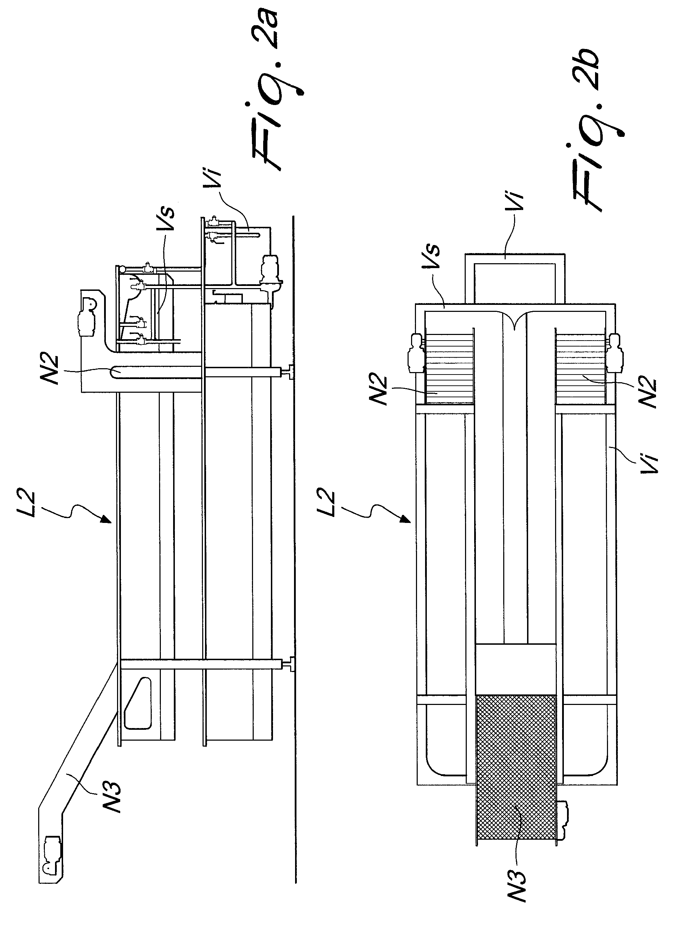

Figures 2a and 2b are a side view and a plan view of a second embodiment of the new washing unit.

In this embodiment, the washing unit is designated by L2 and is loaded into its lower tank Vi.

The upper and lower tanks Vs, Vi are substantially identical to the tanks Vs, Vi of the first embodiment, except that the upper tank Vs does not have openings or chutes toward the lower tank Vi and the lower tank Vi has, at or proximate to the corners between the side walls and the partitions Vp, a connection comprising lifting belts N2 which are suitable to lift the product from the lateral regions of the lower tank Vi and pour it into the upper tank Vs.

The processing path is such that the product is introduced in the lower tank Vi, on the side where the partitions Vp are connected to the shorter wall of said tank Vi, and is entrained by the motion of the water toward the opposite shorter wall of said tank Vi in order to be conveyed in the outer regions between the partitions Vp and the lateral edges of the tank Vi (Figure 5).

A lifting belt N2 for each lateral region of the lower tank Vi transfers the product to the upper tank Vs. The product is entrained by the water in the upper tank Vs in the same direction as its first path in the lower tank Vi and is moved away by means of a conveyor belt N3.

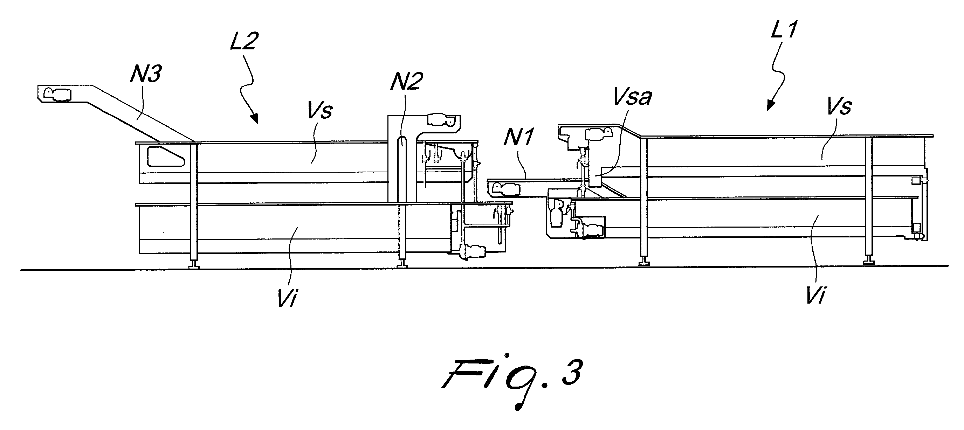

It is preferable to use a combination of the two types of washing unit, first a washing unit L1 with loading in the upper tank Vs and then a washing unit L2 with loading in the lower tank Vi, as shown in Figure 3.

In this combination, the following can be performed:
- in the upper tank Vs of the first washing unit L1, a prewash with bubbling in addition to bactericidal agent;
- in the lateral regions of the lower tank Vi of the first washing unit L1, precipitation with settling;
- in the central region of the lower tank Vi of the first washing unit L1, washing of the product with bubbling with the addition of bactericidal agent;
- in the central region of the lower tank Vi of the second washing unit L2, a second washing with bubbling and with the addition of bactericidal;
- in the lateral regions of the law tank Vi of the second washing unit L2, an additional precipitation with settling;
- in the upper tank Vs of the second washing unit L2, final washing with bubbling without the addition of chemical bactericidals.

A final bactericidal process by irradiation of UV rays, by means of ozone or another non-chemical bactericidal method can be performed at the last wash of the product without the addition of chemical bactericidal agents.

The described washing units have considerable advantages.

They allow to wash the same amount of product by using less space than known washing units.

Extraction of the washed product from the upper tank Vs of the second washing unit L2 at a greater height than in current washing units allows the use of a short lifting belt N, which is therefore less expensive, for introducing the product in the drying unit.

The washing unit according to the invention allows to perform differentiated washes and treatments in the various tanks Vs, Vi without requiring a complete traditional washing unit for each type of treatment and/or wash.

The washing unit according to the invention allows to recover any washing water that overflows from the upper tanks Vs without requiring particular collection channels, pumps or drains.

The disclosures in Italian Patent Application No. PD2005A000370 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A washing unit particularly for vegetables, **characterized in that** it comprises at least two stacked tanks (Vs, Vi), which are suitable to contain washing water and vegetables to be washed, and wherein the upper tanks (Vs) are connected to the lower tanks (Vi), so that the vegetables to be washed are transferred among the various tanks (Vi, Vs).

2. The washing unit according to claim 1, **characterized in that** at least the lower tank (Vi) has at least two vertical partitions (Vp) which are parallel to each other and to the longer walls of the tank (Vi), and wherein said partitions are both connected to one of the shorter walls of said tank (Vi), so as to form two lateral regions, which are adjacent to the side walls, and a central region, which is comprised between said partitions (Vp), and wherein said central region and said lateral regions are connected proximate to the shorter wall of the tank (Vi) which is not connected to said partitions (Vp).

3. The washing unit according to one of the preceding claims, **characterized in that** the upper tank (Vs) has lower openings (Vsa) which are suitable to transfer the vegetables to the lower tank (Vi), and wherein said vegetables are transferred preferably in the lateral regions of the lower tank (Vi) proximate to the shorter wall that is connected to said partitions (Vp).

4. The washing unit according to one of claims 1 to 2, **characterized in that** the lower tank (Vi) is provided with lifting belts (N2) suitable to transfer the vegetables to the upper tank (Vs) and wherein said lifting belts (N2) are arranged in the lateral regions, proximate to the shorter wall, of the lower tank which is connected to said partitions (Vp).

5. The washing unit according to one of the preceding claims, **characterized in that** at least one of the tanks (Vs, Vi) is provided with bubblers which are suitable to introduce air in the water, and wherein said bubblers are arranged at a depth which is intermediate between the bottom of the tank (Vs, Vi) and the surface of the water.

6. The washing unit according to one of claims 1 to 5, **characterized in that** it has a lifting belt (N1) for extracting the vegetables in the lower tank (Vi) and wherein said lifting belt (N) is arranged in the central region of said lower tank (Vi) proximate to the shorter wall that is connected to said partitions (Vp).

7. The washing unit according to one of claims 1 to 6, **characterized in that** the vegetables are introduced in the upper tank (Vs), travel through said upper tank (Vs), are transferred into the lateral regions of the lower tank (Vi) proximate to the shorter wall connected to the partitions (Vp), flow along said lateral regions and then merge and travel along the central region of said lower tank (Vi) and flow out from it.

8. The washing unit according to one of claims 1 to 7, **characterized in that** the vegetables are introduced in the central region of the lower tank (Vi) proximate to the shorter wall that is connected to the partitions (Vp), travel along said central region and then merge and flow along the lateral regions of said lower tank, are raised and introduced in the upper tank (Vs), and flow along it so as to flow out or be extracted at the opposite end of said upper tank (Vs).

9. The washing unit according to one of claims 7 and 8, **characterized in that** it comprises a washing unit (L1) with loading in the upper tank (Vs) according to claim 7 and, in sequence, a washing unit (L2) with loading in the lower tank (Vi), according to claim 8, and wherein the lifting belt (N1) for extraction from the lower tank (Vi) of the first washing unit (L1) introduces the product into the lower tank (Vi) of the second washing unit (L2).
